# DEMANDE DE BREVET EUROPEEN

(11) **EP 4 844 439 A1**
(43) Date de publication de la demande: **25.11.2026**
(21) Numéro de dépôt: 26179535.5
(22) Date de dépôt: 19.05.2026
(51) Int. Cl.: G01S 7/481, G01N 21/3554, G01S 7/497, G01S 17/88, G01N 21/17

(54) **PROCÉDÉ ET DISPOSITIF LIDAR MULTISPECTRAL POUR MESURER UN TAUX D' HUMIDITÉ SUR UNE CIBLE À DISTANCE**

(30) Priorité: 21.05.2025 FR 2505457
(71) Demandeur: IRIDESENSE, 75005 Paris (FR)
(72) Inventeur: BUARD, Nadine, 75005 PARIS (FR); CHEVALLARD, Elise, 75005 PARIS (FR); DE ROSA, Nicolas, 75005 PARIS (FR)
(74) Mandataire: Bandpay & Greuter

(57) **Abrégé**

Procédé pour mesurer à distance un taux d'humidité sur une cible d'intérêt (TG) comprenant : émettre un faisceau laser pulsé (TX), chaque impulsion comprenant une pluralité de longueurs d'onde dans une bande de travail (B0) s'étendant dans l'infra-rouge court, de préférence entre 1400 nm et 1700 nm, puis pour chaque impulsion :
- diriger un rayonnement incident vers une zone d'intérêt (Z1)
- recevoir une portion du rayonnement incident sur un premier détecteur (21), et déterminer une première quantité optique QTX,
- recevoir sur un deuxième détecteur (22) un rayonnement réfléchi (RX) par la cible, et déterminer une deuxième quantité optique QRX,
- obtenir une distance dd à la cible,
- déterminer au moins une réflectivité sélective,
- en déduire un taux d'humidité (ML), le taux d'humidité étant d'autant plus grand que la réflectivité sélective est plus petite, la distance à la cible étant supérieure 150 cm.

## Description

La présente invention se rapporte généralement aux procédés et dispositifs de type lidar multispectral dans le contexte d'un besoin de mesurer un taux d'humidité dans divers articles, denrées ou matériaux, ou plus généralement concernant une cible d'intérêt. En complément, il peut aussi être requis de mesurer une granulométrie de la cible d'intérêt et/ou un volume de la cible d'intérêt.

La mesure d'un taux d'humidité implique dans l'art connu de prélever un échantillon, de le peser, de l'assécher et de le peser à nouveau pour en déduire la teneur en eau. Ce procédé est fastidieux. Le résultat n'est pas obtenu rapidement.

Il serait souhaitable de mesurer un taux d'humidité dans une cible à distance, sans avoir à prélever et sacrifier un extrait du matériau à évaluer.

De plus, il serait souhaitable de mesurer un taux d'humidité avec une réponse sans délai, avec de préférence une mesure réalisée en temps réel.

Ce besoin se manifeste dans divers domaines. Parmi de nombreux exemples, on peut citer par exemple la détermination de la teneur en eau d'une biomasse, la détermination de la teneur en eau de minerai d'une mine à ciel ouvert.

Certains ont essayé d'utiliser des caméras vidéo multispectrales pour détecter la présence d'eau, voire la teneur en eau, en se basant sur un phénomène d'absorption des molécules d'eau sélectivement en fonction des longueurs d'onde. Toutefois, ces solutions laissent à désirer car leur efficacité est largement dépendante des conditions d'éclairement de la scène d'intérêt et ces solutions peuvent être perturbées par certaines sources lumineuses naturelles ou artificielles. Bien entendu ces solutions sont inefficaces en condition nocturne.

Les inventeurs se sont attachés à proposer une méthode et un dispositif pour mesurer en temps réel un taux d'humidité dans une cible à distance, de façon fiable et indépendante des conditions d'éclairement de la scène d'intérêt. De plus, il est souhaitable de pouvoir pratiquer une telle mesure alors que la cible est stationnaire mais aussi lorsque la cible est mobile. La cible peut être également hétérogène.

On note que le point de vue du dispositif peut être fixe ou mobile. Le dispositif peut se déplacer au cours de l'opération et/ou de la réalisation de la mesure.

A cet effet, il est proposé un procédé pour mesurer à distance un taux d'humidité sur une cible d'intérêt le procédé comprenant:
- définir une zone d'intérêt dans un champ de vision, la zone d'intérêt ayant une position au moins en partie dans la cible d'intérêt,
- émettre un faisceau laser pulsé, chaque impulsion formant un rayonnement incident comprenant une pluralité de longueurs d'onde dans une bande de travail s'étendant dans l'infra-rouge à ondes courtes, puis pour chaque impulsion :
- diriger un rayonnement incident vers la zone d'intérêt,
- recevoir une portion du rayonnement incident sur un premier détecteur, et déterminer une première quantité optique QTX,
- recevoir sur un deuxième détecteur un rayonnement réfléchi par la cible, et déterminer une deuxième quantité optique **QRX,**
- obtenir une distance **dd** à la cible,
- déterminer au moins une réflectivité sélective de base **RS** selon la formule **RS = Fct [(QRX/QTX), dd], Fct** étant une fonction de correction,
- en déduire un taux d'humidité sur la zone d'intérêt, le taux d'humidité étant d'autant plus grand que la réflectivité sélective de base est plus petite, la distance à la cible étant supérieure 150cm.

Grâce à ces dispositions, l'absorption optique importante des molécules d'eau dans la bande particulière de l'infrarouge court [1400 - 1460 nm] est exploitée pour déterminer un taux d'humidité à distance sans nécessiter de prélever l'échantillon.

Il faut comprendre que le terme « mesurer à distance » couvre des distances allant de 1,5 m à au moins 200 m, avec une efficacité de détection du taux d'humidité satisfaisante à toutes ces distances et même jusqu'à des distances au-delà de 200 m.

On peut ainsi déterminer un taux d'humidité que ce soit sur une cible fixe ou sur une cible mobile.

On remarque que le procédé proposé fonctionne quel que soit l'éclairage de la scène où se trouve la cible, cela fonctionne correctement de nuit comme de jour y compris en plein soleil.

Grâce à l'utilisation de la bande de longueur d'onde dans l'infrarouge à ondes courtes, le procédé peut opérer en toute sécurité oculaire, et il n'est nul besoin d'opérer en site protégé, des opérateurs humains peuvent se trouver dans la zone d'action du dispositif qui en met en œuvre le procédé.

Il faut noter que la zone d'intérêt peut représenter une petite partie du champ de vision, ou une partie assez importante du champ de vision, voire la totalité du champ de vision. De plus, le focus général du champ de vision peut être grand ou petit, par rapport à la taille de la cible.

Dans un cas particulier, la zone d'intérêt peut être restreinte à une zone ponctuelle, même à un point particulier.

Optionnellement, lorsque la zone d'intérêt présente une certaine surface, c'est un taux d'humidité moyen sur la surface en question que le procédé permet de déterminer.

Le taux d'humidité (ponctuel ou moyenné sur la zone d'intérêt) **ML** peut être exprimé comme une fonction de la réflectivité sélective de base, soit ML = H (RS), la fonction concernée ici est notée H, qui permet de transformer la valeur de réflectivité sélective en valeur de taux d'humidité.

Dans un autre cas particulier, la zone d'intérêt est aussi grande que le champ de vision, ou couvre une grande partie du champ de vision.

Le balayage de la zone d'intérêt permet d'obtenir un nuage de points qui représente une cartographie fine du taux d'humidité en 2 dimensions ou en 3 dimensions, selon la typologie de la cible.

Dans le présent document, la cible peut être constituée d'un matériau hétérogène d'intérêt.

On remarque qu'avantageusement la fonction Fct présentée ci-dessus peut intégrer une correction de certaines non-linéarités des premier et deuxième détecteurs.

Le dispositif de détection lidar fait l'objet d'une calibration initiale avec des cibles de référence placées successivement à diverses distances de manière à pouvoir déterminer la fonction de correction. Une fois cette calibration effectuée, c'est la fonction de correction Fct qui porte la caractérisation des diverses non-linéarités et déviations constatées, ce qui permet d'obtenir une précision remarquable en pratique.

La fonction de correction peut être formée en toute partie par la fonction Fct ans la formule RS = Fct [(QRX/QTX), dd] exposée ci-dessus.

La distance **dd** est la distance qui sépare généralement la cible du dispositif lidar. Elle peut être obtenu de plusieurs manière.

Selon une possibilité, la distance **dd** peut être un paramètre connu conséquence des positions relatives connues du dispositif lidar et de la cible, sans qu'il soit besoin de le mesurer par le mécanisme de time-to-flight.

Selon une autre possibilité, la distance à la cible **dd** est mesurée à chaque impulsion par le mécanisme de time-to-flight connu en soi. Dit autrement on détermine et/ou on calcule la distance **dd** en fonction d'un délai de retour du rayonnement réfléchi. Alors la distance dd est la distance qui sépare le dispositif lidar de chaque point scanné de la surface de la cible. On peut ainsi former, grâce au balayage, un nuage de points en 3 dimensions.

Le contenu spectral des impulsions peut être continu ou discontinu. De préférence, chacune des impulsions contient une sortie de source supercontinuum couvrant toute la bande de base.

Comme on le verra, il est prévu de travailler avec une ou plusieurs tables de référence des réflectivités connues pour des matériaux d'intérêt.

Comme il sera discuté plus loin, il peut être prévu de pratiquer un balayage d'un ensemble de points impactés par les impulsions successives, mais il n'est pas exclu d'avoir un système dépourvu de balayage, avec toujours le même point qui est ciblé par les impulsions successives. Dit autrement, la zone d'intérêt peut être ponctuelle ou peut être une zone plus large balayée par un mécanisme de déviation sélective des impulsions successives.

Selon une réalisation, la bande de travail s'étend entre **1400** nm et **1700** nm. Selon une réalisation, la bande de travail s'étend entre 1400 nm et 1500 nm. On choisit ainsi une bande de longueur d'ondes où se manifeste particulièrement bien l'absorption sélective des molécules d'eau.

Selon une réalisation, la bande de travail B0 comprend au moins une première bande **B1** et une deuxième bande **B2.** Le procédé comprend alors un filtrage spectral sélectif, configuré pour laisser passer sélectivement les longueurs d'onde d'une des première ou deuxième bandes B1, B2.

La réflectivité de base **RS0** est obtenue, sans filtrage, **RS0** = Fct [(QRX/QTX), dd].

La réflectivité sélective de première bande **RS1** est obtenue, avec filtrage sur la première bande B1, RS1 = Fct [(QRX/QTX), dd]. La réflectivité sélective de deuxième bande RS2 est obtenue, avec filtrage sur B2, **RS2** = Fct [(QRX/QTX), dd].

Selon une réalisation, La bande de travail B0 comprend en outre au moins une troisième bande **B3,** et optionnellement une quatrième bande **B4.** Le procédé comprend alors un filtre spectral sélectif, configuré pour laisser passer sélectivement les longueurs d'onde d'une des trois ou quatre bandes B1,B2,B3,B4.

Les quatre bandes forment une partition de la bande de base B0, à savoir B1 pour des λ1 1400 - 1460, B2 pour des λ2 1460 - 1530, B3 pour des λ3 1530 - 1500 et B4 pour des λ4 1500 - 1600.

La réflectivité sélective de troisième bande **RS3** est obtenue, avec filtrage sur la troisième bande B3, RS3 = Fct [(QRX/QTX), dd]. La réflectivité sélective de quatrième bande **RS4** est obtenue, avec filtrage sur B4, RS4 = Fct [(QRX/QTX), dd].

Selon une réalisation, il est prévu une étape de calibration préalable comprenant des mesures de la réflectivité sélective sur une cible de référence. Cette étape de calibration permet de prendre en compte certaines non-linéarités des détecteurs optiques.

Selon une réalisation, il est prévu, pour chaque impulsion, de dévier le faisceau selon un angle d'azimut (θ) et un angle d'élévation (Φ) pour balayer au moins la zone d'intérêt. On procure ainsi un balayage efficace et rapide de la zone d'intérêt et on peut scanner facilement la zone d'intérêt.

Selon une réalisation, le champ de vision s'étend sur une plage de balayage angulaire d'azimut (-θ1,+θ1) ajustable et comprise entre -180° et +180°, de préférence entre -90° et +90°, voire encore entre -60° et +60°.

De plus, le champ de vision s'étend sur une plage de balayage angulaire d'élévation (-Φ1,+Φ1) ajustable et comprise entre -60° et +60°, de préférence entre -30° et +30°, voire encore entre -20° et +20°.

Le champ de vision peut être ainsi de type rectangulaire. On note qu'on peut ajuster la taille du champ de vision en modifiant les bornes mini et maxi de la course de balayage. Le focus peut être mis sur champ réduit si nécessaire.

Le balayage obtenu est un mouvement oscillatoire en azimut (θ,ω2) et élévation (Φ,ω1), comme il sera discuté plus loin.

Selon une réalisation, la fréquence de tir est d'au moins 100 kHz. On obtient ainsi une bonne réactivité et un résultat en temps réel ce qui est pertinent pour des cibles scannées à la volée.

Selon une réalisation, la fréquence de tir est de **500** kHz, soit une période inter-impulsion Tr de 2 µs.

Ceci permet de collecter un très grand nombre de points et d'obtenir ainsi une très bonne résolution et une précision pour les données collectées, en fonction des modes et vitesses de balayage.

Ce grand nombre de points collectés permet de construire une cartographie précise et de bonne résolution de la cible, permettant d'évaluer le taux d'humidité de chacune des zones de la cible.

De plus, la collecte d'un grand nombre de points permet aussi de construire une cartographie fine en 3D de la cible d'intérêt, tous les points scannés ne se trouvant pas à la même distance du dispositif lidar.

La durée de l'impulsion lumineuse est très courte, e.g. de l'ordre de la nanoseconde.

Selon une réalisation, le faisceau laser pulsé est émis à partir d'un point de vue, le procédé étant appliqué avec un mouvement relatif du point de vue par rapport à la cible, que ce soit une cible mouvante par rapport à un point de vue stationnaire, ou une cible stationnaire par rapport à un point de vue en déplacement.

Dans ce cas de figure, le point de vue de l'émetteur lidar évolue dans le temps et on procède, par association d'images ou par procédé connu sous l'acronyme SLAM, à une construction tridimensionnelle de la cible afin de pouvoir en déduire son volume.

Selon une réalisation, la cible peut être généralement à une distance comprise entre 1,5 mètres et 300 mètres. Le procédé et le dispositif lidar multispectral proposé fonctionne de manière satisfaisante pour des distances significatives et pertinentes pour beaucoup de cas pratiques, par exemple entre 2 m et 50 m.

Selon une réalisation, le procédé prévoit en outre une mesure de granulométrie de la cible. On procure ainsi une information complémentaire qui vient s'ajouter à l'estimation du taux d'humidité pour caractériser la cible.

Selon une réalisation, le procédé prévoit en outre une estimation de volume de la cible. On procure ainsi encore une autre information complémentaire qui vient s'ajouter à l'estimation du taux d'humidité pour caractériser la cible.

La présente invention concerne aussi un dispositif lidar multispectral pour mesurer à distance un taux d'humidité sur une cible d'intérêt, comprenant :
- un émetteur laser configuré pour émettre un faisceau laser pulsé, chaque impulsion formant un rayonnement incident comprenant une pluralité de longueurs d'onde dans une bande de travail s'étendant dans l'infra-rouge à ondes courtes, de préférence entre 1400 nm et 1700 nm, la bande de travail comprenant de préférence au moins une première bande et une deuxième bande,
- un filtre spectral sélectif, configuré pour laisser passer sélectivement les longueurs d'onde notamment d'une des première ou deuxième bandes,
- un premier détecteur, configuré pour recevoir une portion du rayonnement incident de chaque impulsion, et pour délivrer une première quantité optique,
- un deuxième détecteur, configuré pour recevoir un rayonnement réfléchi par la cible, sans filtrage ou via le filtre spectral sélectif, et pour délivrer une deuxième quantité optique,
- une unité de commande, configurée pour déterminer au moins une réflectivité sélective sur tout ou partie de la bande de travail afin de déterminer un taux d'humidité dans la zone d'intérêt à partir d'au moins ladite réflectivité sélective.

L'unité de commande peut calculer la distance dd à la cible à partir du temps de parcours optique, puis en utilisant par ailleurs la première quantité optique QTX est la une deuxième quantité optique QRX, l'unité de commande peut déterminer la réflexivité sélective et en déduire le taux d'humidité. La réflectivité sélective est calculée selon la formule et la fonction de correction qui ont été exposées ci-dessus.

Selon une autre configuration possible, la distance dd à la cible peut être connue et donnée, sans faire appel au calcul évoqué au paragraphe précédent.

Selon une réalisation, le dispositif comprend un premier séparateur de faisceau ('Beamsplitter' dans le langage du métier) et un deuxième séparateur de faisceau, les séparateurs de faisceaux étant destinés à diriger une partie de la puissance optique vers le premier détecteur pour l'émission et pour diriger le retour de la réflexion vers le deuxième détecteur.

Selon une réalisation, le dispositif peut comprendre en outre un dispositif de déviation à deux dimensions, configuré pour dévier le faisceau selon un angle d'azimut (θ) et un angle d'élévation (Φ).

Selon une réalisation, le dispositif est de classe 1 au sens de la norme IEC 62368-1.

L'invention sera davantage détaillée par la description de modes de réalisation non limitatifs, et sur la base des figures annexées illustrant des variantes de l'invention, dans lesquelles :
- [Fig.1] illustre de manière très schématique un exemple de dispositif optique conforme à la présente invention ;
- [Fig.2] illustre un exemple de la bande de travail comprenant plusieurs bandes adjacentes de longueur d'onde, et des courbes de réflectivité en fonction de la teneur en eau pour un matériau donné ;
- [Fig.3] montre un exemple de table de référence des taux d'humidité en fonction de de la réflexivité sélective pour une pluralité de matériaux ;
- [Fig.4] montre un exemple de scène couverte par un exemple de champ de vision ;
- [Fig.5] montre un exemple de logique de balayage du champ de vision ;
- [Fig.6] montre bloc diagramme illustrant la configuration du dispositif optique et l'utilisation des nuages de points et données ;
- [Fig.7] illustre des étapes de procédé mises en œuvre dans la présente invention ;
- [Fig.8] illustre une mesure de granulométrie de la cible ;
- [Fig.9] illustre une mesure de volume de la cible.

Sur les différentes figures, les mêmes références désignent des éléments identiques ou similaires. Pour des raisons de clarté de l'exposé, certains éléments ne sont pas nécessairement représentés à l'échelle.

### Dispositif optique

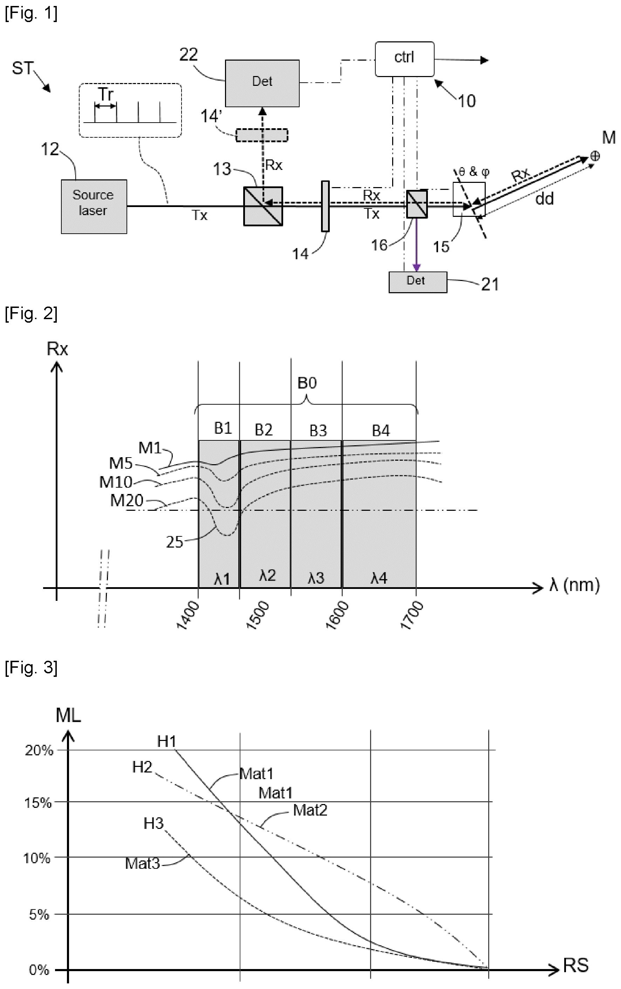

La figure 1 montre un dispositif lidar **ST.** Le dispositif lidar ST peut être installé à poste fixe ou il peut être embarqué sur un engin mobile, par exemple un véhicule de chantier, un drone ou tout autre appareil doté d'une capacité de déplacement.

Pour rappel, un dispositif lidar émet des impulsions de lumière cohérente (laser) et reçoit en retour des réflexions revenant d'une cible impactée par les impulsions.

Le dispositif lidar **ST** comprend un émetteur laser **12** configuré pour émettre un faisceau laser pulsé. Par « faisceau laser pulsé », il faut comprendre qu'une impulsion très courte est envoyée puis que l'émission cesse pendant une période inter-impulsion **Tr** et ensuite une nouvelle impulsion est envoyée et ainsi de suite. La durée de chaque impulsion peut être de l'ordre de 1 à 3 nanosecondes (valeurs non limitatives).

La période inter-impulsion définit une fréquence de tir. La fréquence de tir peut être au moins de 100 kHz afin de pouvoir illuminer un très grand nombre de points et recueillir les échos de lumière pour ces points dans un faible laps de temps.

Dans l'exemple illustré, on peut choisir une fréquence de tir de l'ordre de 500 kHz, c'est-à-dire 500 000 impulsions par seconde.

On relève ainsi 500 000 points par seconde, ce qui, en fonction de la vitesse de balayage du champ de vision, permet d'obtenir un nombre très élevé de points par une unité de surface et par unité de temps, favorisant une excellente résolution des données produites.

Chaque impulsion comprend spectralement une pluralité de longueurs d'onde dans une bande de travail **B0** qui s'étend dans une bande de longueur d'ondes infra-rouge à ondes courtes (on parle de SWIR soit Short Wave Infrared, entre 1000 et 2500 nm).

Selon un exemple particulièrement pertinent, on choisit comme bande de travail la bande qui s'étend de 1400 nm à 1700 nm. Selon un autre exemple bande de travail la bande qui s'étend de 1400 nm à 1600 nm. En se tournant vers la figure 2, on remarque que c'est dans cette plage de longueurs d'onde que la diminution de la réflectivité est la plus marquée vis-à-vis de la teneur en eau. On note que plus le taux d'humidité est important, plus le creux **25** dans la courbe dans la première bande B1 de longueurs d'onde est important. Dans l'exemple illustré, **M1, M5, M10, M20** correspondent aux taux d'humidité respectifs de 1%,5%,10% et 20%.

Dans l'exemple illustré, la bande de travail B0 est décomposée en quatre bandes adjacentes à savoir une première bande B1, une deuxième bande B2, une troisième bande **B3,** et une quatrième bande **B4.**

Exprimé autrement, les quatre bandes ci-dessus forment une partition de la bande de travail. La première bande **B1** comprend les longueurs d'onde **λ1** de 1400 à 1460 nm, deuxième bande **B2** comprend les longueurs d'onde **λ2** de 1460 à 1530 nm, la troisième bande **B3** comprend les longueurs d'onde **λ3** de 1530 à 1500 nm et la quatrième bande **B4** comprend les longueurs **λ4** de 1500 à 1600 nm.

Les bandes pourraient être discontinues, i.e. non adjacentes, à l'intérieur de la bande de travail. La bande de travail pourrait comprendre plus de 4 sous-bandes. La bande de travail pourrait comprendre des raies discrètes (peigne de longueurs d'onde).

Bien entendu, la bande de travail pourrait avoir des bornes différentes de celles discutées ci-dessus. De même, la bande de travail pourrait être décomposée en 3 bandes adjacentes ou même 2 bandes adjacentes.

Le dispositif lidar **ST** comprend un premier séparateur de faisceau **13** (Beamsplitter) qui laisse passer les impulsions incidentes **TX** mais qui dévie les réflexions **RX** revenant de la cible comme il sera discuté plus loin.

Le dispositif lidar **ST** comprend un filtre spectral **14.** Dans l'exemple illustré, le filtre spectral est interposé sur le parcours optique en aval du séparateur de faisceau **13.**

En fonction de sa commande ou sélection de bande, le filtre spectral laisse passer sélectivement les longueurs d'onde d'une des bandes et stoppe les autres. Le filtre peut être aussi placé dans un état inactif et dans ce cas laisse passer toutes les longueurs d'onde de la bande de travail B0.

Le filtre spectral sélectif peut être de tout type connu dans l'art.

Dans l'exemple illustré en trait continu le filtre spectral 14 filtre le trajet optique aller et le trajet optique retour. Selon une alternative dessinée en trait pointillé **14',** le filtre spectral pourrait ne filtrer que le trajet optique de retour.

Le dispositif lidar **ST** comprend un deuxième séparateur de faisceau **16** qui dévie une portion du rayonnement incident **TX** de chaque impulsion vers un détecteur (acronyme **'Det').**

Dans l'exemple illustré à la figure 1, le dispositif lidar **ST** comprend un dispositif de déviation **15** à deux dimensions, configuré pour dévier le faisceau selon un angle d'azimut (θ) et un angle d'élévation (Φ). On verra plus loin la logique de balayage (amplitude et fréquence dans chacune des directions).

Le retour lumineux **RX** emprunte le même trajet que le faisceau incident, jusqu'au premier séparateur de faisceau **13** qui le dévie à angle droit.

Comme déjà évoqué, dans une variante particulière, le dispositif lidar pourrait être dépourvu de dispositif de déviation.

Le dispositif lidar **ST** comprend un premier détecteur **21,** qui reçoit une portion du rayonnement incident de chaque impulsion. Le procédé proposé permet de déterminer une première quantité optique QTX, image de la puissance lumineuse émise.

Le dispositif lidar **ST** comprend un deuxième détecteur **22,** configuré pour recevoir le rayonnement réfléchi RX par la cible. Le procédé proposé permet de déterminer une deuxième quantité optique RTX, image de la puissance reçue. C'est le premier séparateur de faisceau **13** qui dévie le rayonnement réfléchi **RX** vers le deuxième détecteur **22.**

On peut calculer une réflectivité brute en établissant le ratio suivant : QRX/QTX.

Par ailleurs, on mesure le temps Δ**t** nécessaire à l'aller-retour, c'est le mécanisme time-to-flight connu en soi. La distance dd est ½ c Δ**t**.

On note ici que la cible peut être généralement à une distance comprise entre 1,5 mètre et 300 mètres. Le procédé et le dispositif lidar multispectral proposé fonctionne de manière satisfaisante pour de distances significatives pour beaucoup de cas pratiques, par exemple entre 2 m et 50 m.

A partir des trois données **QTX, RTX** et **dd,** et au vu de premières données de calibration DR1 discutées plus loin, le procédé peut déterminer la réflectivité sélective.

On détermine une réflectivité de base RS (avec filtre spectral inactif) selon la formule RS0 = Fct [QRX,QTX,dd] ou RS = Fct [(QRX/QTX), dd], dans laquelle Fct est une fonction de correction discutée en détails plus loin.

La réflectivité sélective de première bande **RS1** est obtenue, avec filtrage sur B1, selon RS1 = [Fct [(QRX/QTX), dd]. La réflectivité sélective de deuxième bande **RS2** est obtenue, avec filtrage sur B2, selon RS2 = Fct [(QRX/QTX), dd].

La réflectivité sélective de troisième bande **RS3** est obtenue, avec filtrage sur la troisième bande B3, RS3 = Fct [(QRX/QTX), dd]. La réflectivité sélective de quatrième bande **RS4** est obtenue, avec filtrage sur B4, RS4 = Fct [(QRX/QTX), dd].

Comme il sera vu plus loin, on peut utiliser les réflectivités sélectives définies précédemment (RS0,RS1,...,RS4) pour en déduire un taux d'humidité **ML** de la cible.

Par ailleurs, le dispositif lidar **ST** comprend une unité de commande **10.** L'unité de commande **10** pilote les moyens de commande de pilotage de l'excitation de la source laser **12,** du filtre spectral sélectif, et du dispositif de déviation (moyens de balayage) s'il est présent.

L'unité de commande **10** reçoit les informations en provenance du premier détecteur **21** et en provenance du premier deuxième **22.**

Selon un exemple, l'unité de commande délivre les résultats sous forme de nuages de points. Toutefois, la mise à disposition des résultats pourrait prendre une forme quelconque.

### Calibrations

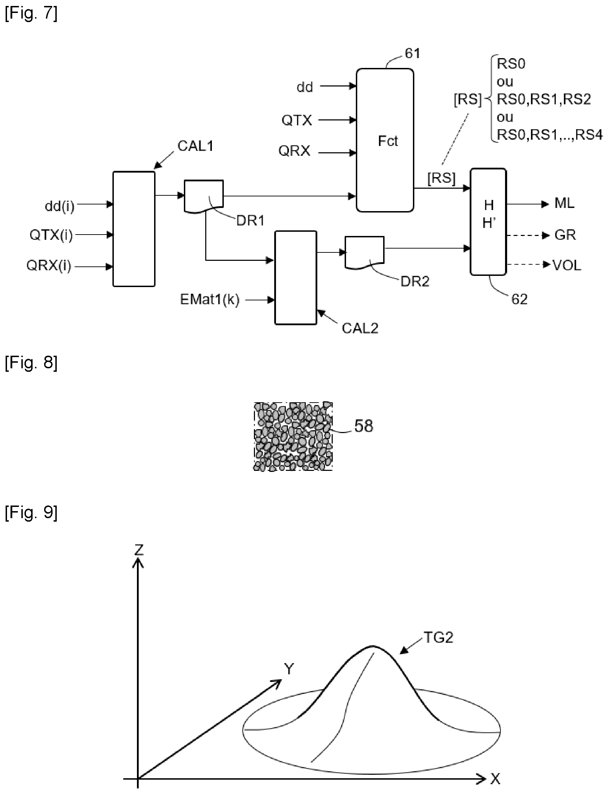

Comme illustré à la figure 7, en vue de pouvoir estimer un taux d'humidité dans un matériau cible, on procède à deux étapes de calibration : une première étape de calibration **CAL1** qui consiste à calibrer les caractéristiques intrinsèques du dispositif optique lidar et une deuxième étape de calibration **CAL2** qui consiste à établir des données de référence **DR2** relatives au matériau ou à une famille de matériaux dont on va déterminer le taux d'humidité à l'aide du dispositif optique.

Concernant la première étape de calibration **CAL1,** il s'agit d'utiliser un objet de référence comme cible, et on fait une série de mesures (dd(i), QTX(i), RTX(i)), par exemple avec l'objet de référence placé à différentes distances, comme connu en soi.

Bien entendu, d'autres méthodes de calibration ne sont pas exclues.

Le résultat obtenu par ces mesures successives sont transcrits dans des données de calibration appelées ici premières données de calibration **DR1.**

Concernant la deuxième étape de calibration **CAL2,** il s'agit d'utiliser plusieurs échantillons **Emat1(k)** de taux d'humidité différents pour une matière cible, placés toujours à un même endroit.

Pour un matériau donné par exemple **Mat1,** on peut obtenir une courbe de référence **H1** qui relie le taux d'humidité à la réflectivité sélective. On note que la figure 3 illustre une seule courbe pour le matériau **Mat1** mais on pourrait obtenir plusieurs courbes spécifiques à chacune des bandes **B1, B2, B3** et **B4** en plus de celle relative à la bande de base **B0.** On utilise des échantillons du matériau **Mat1** à différentes teneurs en eau maîtrisées, et on mesure la réflectivité spécifique obtenue pour la bande de base et optionnellement chacune des bandes particulières. Bien entendu, on utilise les premières données de calibration pour obtenir les réflexivités spécifiques. Le résultat obtenu par ces mesures successives sont transcrits dans des deuxièmes données de calibration **DR2.**

Bien entendu, on peut procéder à une ou plusieurs autres calibrations du taux d'humidité reliant la réflectivité sélective au taux d'humidité pour un ou plusieurs autres matériaux, par exemple **Mat2, Mat3.** Les autres matériaux, **Mat2, Mat3** donnent respectivement les courbes **H2** et **H3** la figure 3.

Pour mémoire, à la figure 3, l'axe des abscisses représente la réflectivité sélective et l'axe des ordonnées représente le taux d'humidité dans le matériau d'intérêt.

On note que les courbes **H1, H2, H3** peuvent être le résultat d'une interpolation linéaire ou polynomiale à partir des points discrets qui ont fait l'objet d'une mesure.

### Cible, mesures et résultats

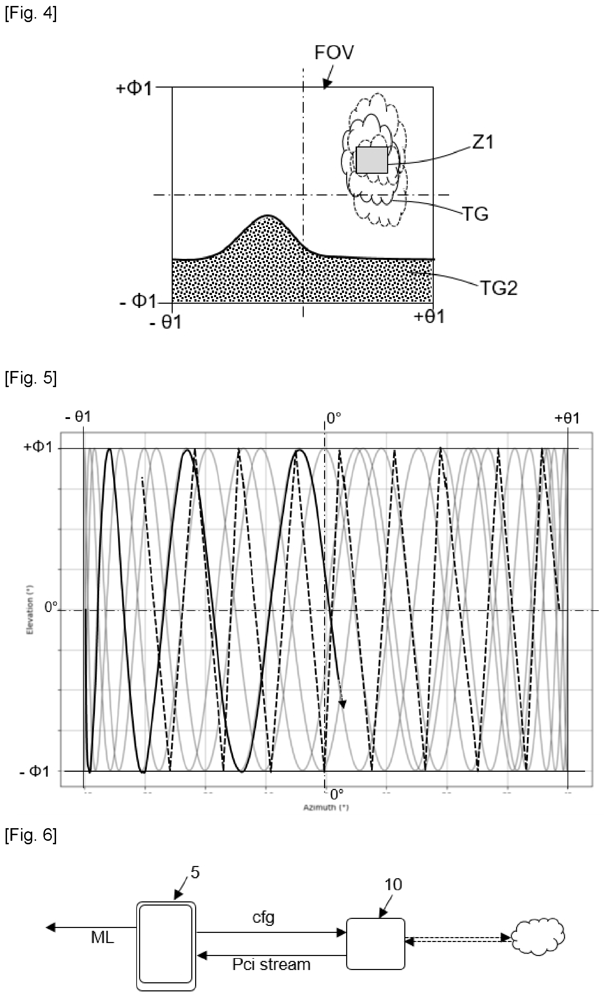

Dans la scène d'intérêt, on a au moins une cible d'intérêt. Pour la concision et la bonne compréhension de l'exposé, la figure 4 illustre un première cible **TG,** dont la géométrie peut varier avec le temps et une deuxième cible. La première cible peut être typiquement un matériau hétérogène, qui peut être fixe ou en mouvement.

La deuxième cible illustrée **TG2** est fixe. Selon cet autre exemple, la cible d'intérêt **TG2** peut présenter une structure propre avec des limites définies et/ou des bordures.

Généralement, la cible d'intérêt peut être mouvante et déstructurée. Généralement, la cible d'intérêt **TG** se trouve dans un champ de vision **FOV.**

On définit une zone d'intérêt **Z1** dans le champ de vision **FOV.** La zone d'intérêt **Z1** peut être la totalité de du champ de vision FOV ou bien seulement une partie. La zone d'intérêt **Z1** peut être délimité par une bordure rectangulaire comme illustré ou par un autre type de géométrie de bordure (cercle ellipse, losange trapèze...). On note que la zone d'intérêt a une position au moins en partie dans la cible d'intérêt TG.

Selon un exemple particulier la zone d'intérêt peut se limiter à un point.

Dans tous les cas où la zone d'intérêt ne se limite pas à un point, il est prévu une fonction balayage pour couvrir au moins la zone d'intérêt et scanner périodiquement la totalité de la zone d'intérêt.

C'est le dispositif de déviation **15** qui est mis à contribution pour diriger les impulsions successives à des positions différentes dans le champ de vision (voire seulement dans la zone d'intérêt selon une option).

Ainsi, il est prévu, pour chaque impulsion, de dévier le faisceau selon un angle d'azimut **θ** et un angle d'élévation **Φ** pour balayer au moins la zone d'intérêt Z1.

Comme illustré à la figure 5, on a un balayage combiné en azimut et en élévation. Le balayage vertical site/élévation est réalisé à une fréquence **w1,** et le balayage horizontal azimut est réalisé à une deuxième fréquence **w2,**

Selon un exemple, ω1 peut être compris entre 150Hz et 350Hz, par exemple au voisinage de 280 Hz, ω2 peut être compris entre 10Hz et 35Hz, par exemple au voisinage de 20 Hz.

Bien entendu les fréquences de balayage horizontales et verticales ω1,ω 2 peuvent être ajustables par configuration instruite par un utilisateur du dispositif lidar.

Selon l'exemple représenté en trait continu à la figure 5, le mode de balayage peut être un balayage de type sinusoïdal.

Selon l'exemple représenté en trait pointillé à la figure 5, le mode de balayage peut être un balayage linéaire (triangle).

Comme illustré à la figure 5, le champ de balayage horizontal s'étend sur une plage de balayage angulaire d'azimut (-θ1,+θ1) ajustable et comprise entre -180° et +180°, de préférence par exemple entre -90° et +90°, voire encore entre -60° et +60°, sans que ces valeurs ne soient limitatives.

Le champ de balayage vertical s'étend sur une plage de balayage angulaire d'élévation (-Φ1,+Φ1) ajustable et comprise entre -60° et +60°, de préférence entre -30° et +30°, voire encore entre -20° et +20°.

Concernant le filtre spectral **14,** la commutation d'une bande de longueur d'ondes à l'autre est plus lente que le balayage spatial. La période type de maintien sur une bande est comprise entre 100ms et 300 ms. Le passage d'une bande à l'autre ne prend que quelques ms.

On remarque toutefois la sélection de bande peut suivre une toute autre logique et être piloté au cas par cas.

Grâce au procédé de balayage spatial et spectral ci-dessus mentionné, le procédé permet d'obtenir plusieurs dizaines d'images par seconde, soit pour une seule couleur (une seule bande spectrale utilisée) soit sur un panel de plusieurs couleurs (plusieurs bandes spectrales utilisées)

On a illustré la figure 7 les étapes de calibration **CAL1** et **CAL2** décrites plus haut, à partir desquelles le processus temps réel d'estimation du taux d'humidité peut être mis en œuvre.

La boite **61** contient le calcul de la réflexivité sélective basé sur la fonction de correction **Fct** déjà discutée plus haut. Ce calcul est réalisé pour chaque impulsion, c'est-à-dire à la fréquence de tir du laser pulsé.

La sortie de la boite **61** est une réflexivité sélective obtenue soit sur la bande de base **B0** soit sur les l'une des bandes particulières **B1, B2, B3** et **B4,** ceci en fonction de la position du filtre spectral sélectif.

La boîte **62** contient un algorithme qui permet de réaliser une estimation du taux d'humidité en fonction d'une ou plusieurs informations de réflectivité sélective reçues de la boîte **61** au vu des deuxièmes données de calibration **DR2.**

Le taux d'humidité (ponctuel ou moyen) **ML** peut être exprimé comme une fonction de la réflectivité sélective de base, soit ML = H (RS), la fonction concernée ici est notée **H.** On peut prévoir d'utiliser une fonction **H'** plus élaborée, qui fait appel à par exemple un réseau de neurones à apprentissage supervisé, ce qui permet de compléter les deuxièmes données de calibration à propos de la dépendance de la réflectivité sélective par rapport au taux d'humidité d'un matériau quelconque. Ceci peut présenter un intérêt si on utilise les 5 taux de réflexivité spécifique **RSi** pour la bande de base et les 4 bandes particulières et divers matériaux de cible.

Sur la figure 6, on a représenté un appareil numérique **5** qui coopère avec l'unité de commande de **10** du dispositif lidar. Cet appareil numérique permet à un utilisateur de configurer les paramètres d'opération du dispositif lidar **(cfg),** par exemple les plages angulaires du champ de vision, les fréquences de balayage et la logique de pilotage du filtre spectral sélectif (donc la sélection des bandes de longueur d'onde). L'unité de commande **10** du dispositif lidar remonte les informations résultant des impulsions lidar, par exemple sous forme de nuages de points **('Pci Stream').**

La détermination du taux d'humidité correspond dans l'exemple le plus fréquent à la détermination d'un taux d'humidité moyen sur la zone d'intérêt **Z1** à savoir un moyennage des valeurs obtenues pour un filtrage spectral donné.

En référence à la figure 6, qui n'est qu'indicative, le découpage fonctionnel entre l'unité de commande 10 du dispositif lidar et une autre unité de commande peut-être tout à fait différent. Le découpage fonctionnel peut être en réalité quelconque, par exemple toutes les fonctions mentionnées peuvent être intégrées dans l'unité de commande 10 du dispositif lidar lui-même, ou selon un autre exemple, l'unité de commande du dispositif lidar peut être un satellite d'une autre unité de commande de plus haut niveau fonctionnel.

### Autres aspects

De manière complémentaire, le dispositif lidar est mis à contribution pour déterminer une granulométrie de la cible. En référence à la figure 8, le matériau peut être composé de grains distincts **58.** Le nuage de points remonté par le dispositif lidar permet de déterminer des contours de grains et par conséquent d'en déduire grâce à cette méthode des tailles de grains. Il est aussi possible de déterminer une granulométrie **GR** pour des matériaux qui ne sont pas constitués de grains distincts mais dont l'aspect de surface est analogue à celle d'un agrégat de grains.

Le lecteur pourra se référer au document CN206876535U pour compléter les enseignements ci-dessus relatifs à la détermination de la granulométrie grâce à un dispositif lidar.

De manière complémentaire, le dispositif lidar est mis à contribution pour déterminer un volume **VOL** de la cible.

Dans un cas de figure où il existe un mouvement relatif de la cible par rapport aux dispositifs lidar (soit c'est le dispositif lidar qui tourne autour de la cible soit c'est la cible qui tourne devant le dispositif lidar) le point de vue de l'émetteur lidar évolue dans le temps et l'unité de commande 10 peut procéder, par association d'images (agrégation de nouvelles images dans une méta-image en 3D) ou par procédé connu sous l'acronyme SLAM, à une construction tridimensionnelle de la cible afin de pouvoir en déduire son volume.

La technologie SLAM (de l'anglais Simultaneous Localization And Mapping) est connue en soi et donc non décrite en détail ici.

Le lecteur pourra se référer au document US12172175 pour compléter les enseignements ci-dessus relatifs à la détermination d'un volume grâce à un dispositif lidar. Grâce à cela, comme illustré à la figure 9, le dispositif lidar peut déterminer le volume d'une cible formée par exemple comme un tas de matériau TG2.

S'agissant de la sécurité oculaire, le dispositif est avantageusement de classe **1** au sens de la norme **IEC 62368-1** (e.g. CEI 62368-1, 4eme édition, publiée le 26 mai 2023). Moyennant quoi, il n'est nul besoin d'opérer le dispositif lidar promu ici en site protégé, des opérateurs humains peuvent se trouver dans la zone d'action du dispositif qui en met en œuvre le procédé.

### Variante continue

Selon un mode de réalisation complémentaire proposé ici, le dispositif lidar **ST** illustré à la figure 1 peut être utilisé différemment, e.g. selon un mode d'émission continu. L'unité de commande **10** est alors configurée pour piloter la source laser 12 en émission continue de rayonnement incident **TX** et le rayonnement réfléchi **RX** renvoyé par la cible est reçu continument sur le deuxième détecteur **22.**

Comme précédemment, le rayonnement incident **TX** peut comprendre spectralement une pluralité de longueurs d'onde dans une bande de travail **B0** qui s'étend dans l'infra-rouge à ondes courtes. Selon un exemple, on choisit comme bande de travail la bande qui s'étend de 1400 nm à 1700 nm. On peut aussi choisir d'utiliser une bande particulière parmi les bandes spécifiques déjà décrites plus haut, i.e. la première bande **B1,** la deuxième bande **B2,** la troisième bande **B3,** ou la quatrième bande **B4.**

Tout comme précédemment, le premier détecteur optique **21** reçoit une portion du rayonnement incident **TX,** ici en continu. Tout comme précédemment, on peut calculer une réflectivité brute en établissant le ratio suivant : QRX/QTX, en échantillonnant les valeurs évoluant continument. Puis on calcule une ou plusieurs réflectivités sélectives définies précédemment (RS0,RS1,...,RS4) grâce à la fonction Fct [(QRX/QTX), dd]. On peut alors en déduire ensuite un taux d'humidité **ML** de la cible, de manière similaire à ce qui été décrit précédemment, e.g. ML = H (RSi).

Le mode de fonctionnement en continu peut être utilisé quelle que soit la taille de la zone d'intérêt **Z1,** par exemple pour une zone d'intérêt ponctuelle ou pour une zone d'intérêt plus large. Aussi, le mode de fonctionnement en continu peut être utilisé avec ou sans balayage.

## Revendications

1. Procédé pour mesurer à distance un taux d'humidité sur une cible d'intérêt (TG), le procédé comprenant:
- définir une zone d'intérêt (Z1) dans un champ de vision (FOV), la zone d'intérêt ayant une position au moins en partie dans la cible d'intérêt,
- émettre un faisceau laser pulsé (TX), chaque impulsion formant un rayonnement incident comprenant une pluralité de longueurs d'onde dans une bande de travail (B0) s'étendant dans l'infra-rouge court, puis pour chaque impulsion :
- diriger un rayonnement incident vers la zone d'intérêt (Z1)
- recevoir une portion du rayonnement incident sur un premier détecteur (21), et déterminer une première quantité optique QTX,
- recevoir sur un deuxième détecteur (22) un rayonnement réfléchi (RX) par la cible, et déterminer une deuxième quantité optique QRX,
- obtenir une distance dd à la cible,
- déterminer au moins une réflectivité sélective de base RS selon la formule RS = Fct [(QRX/QTX), dd], Fct étant une fonction de correction,
- en déduire un taux d'humidité (ML) sur la zone d'intérêt (Z1), le taux d'humidité étant d'autant plus grand que la réflectivité sélective de base est plus petite, la distance à la cible étant supérieure 150cm.

2. Procédé selon la revendication 1, dans lequel la bande de travail s'étend entre 1400 nm et 1700 nm, de préférence entre 1400 nm et 1500 nm.

3. Procédé selon l'une des revendications 1 à 2, dans lequel la bande de travail B0 comprend au moins une première bande (B1) et une deuxième bande (B2), le procédé comprenant un filtrage spectral sélectif (14), configuré pour laisser passer sélectivement les longueurs d'onde d'une des première ou deuxième bandes (B1,B2).

4. Procédé selon la revendication 3, dans lequel la bande de travail (B0) comprend en outre au moins une troisième bande (B3), et optionnellement une quatrième bande (B4).

5. Procédé selon l'une des revendications 1 à 4, dans lequel il est prévu une étape de calibration préalable comprenant des mesures de la réflectivité sélective sur une cible de référence.

6. Procédé selon l'une des revendications 1 à 5, dans lequel le procédé prévoit pour chaque impulsion, de dévier le faisceau selon un angle d'azimut (θ) et un angle d'élévation ( Φ ) pour balayer au moins la zone d'intérêt (Z1).

7. Procédé selon l'une des revendications 1 à 6, dans lequel la fréquence de tir d'au moins 100 kHz.

8. Procédé selon l'une des revendications 1 à 7, dans lequel le procédé prévoit en outre une mesure de granulométrie (GR) de la cible.

9. Procédé selon l'une des revendications 1 à 8, dans lequel le procédé prévoit en outre une estimation de volume de la cible (VOL).

10. Dispositif lidar multispectral (ST) pour mesurer à distance un taux d'humidité sur une cible d'intérêt, comprenant un émetteur laser (12) configuré pour émettre un faisceau laser pulsé, chaque impulsion formant un rayonnement incident comprenant une pluralité de longueurs d'onde dans une bande de travail (B0) s'étendant dans le proche infra-rouge, de préférence entre 1400 nm et 1700 nm, la bande de travail (B0) comprenant de préférence au moins une première bande (B1) et deuxième bande (B2),
- un filtre spectral sélectif (14), configuré pour laisser passer sélectivement les longueurs d'onde notamment d'une des première ou deuxième bandes,
- un premier détecteur (21), configuré pour recevoir une portion du rayonnement incident de chaque impulsion, et pour délivrer une première quantité optique,
- un deuxième détecteur (22), configuré pour recevoir un rayonnement réfléchi (RX) par la cible, sans filtrage ou via le filtre spectral sélectif, et pour délivrer une deuxième quantité optique,
- une unité de commande (10), configurée pour déterminer au moins une réflectivité sélective sur tout ou partie de la bande de travail afin de déterminer un taux d'humidité (ML) dans la zone d'intérêt à partir d'au moins ladite réflectivité sélective.

11. Dispositif selon la revendication 10, comprenant en outre un dispositif de déviation (15) à deux dimensions, configuré pour dévier le faisceau selon un angle d'azimut ( θ ) et un angle d'élévation ( Φ ).

12. Dispositif selon l'une des revendications 10 à 11, le dispositif étant de classe 1 au sens de la norme IEC 62368-1.
